# EUROPEAN PATENT SPECIFICATION

(11) **EP 4 286 194 B1**
(45) Date of publication and mention of the grant of the patent: **29.07.2026**
(21) Application number: 22176520.9
(22) Date of filing: 31.05.2022
(51) Int. Cl.: B60K 11/02, B60K 1/00

(54) **COOLING SYSTEM FOR COOLING A VEHICLE COMPONENT, METHOD FOR OPERATING A COOLING SYSTEM AND VEHICLE COMPRISING A COOLING SYSTEM**
KÜHLSYSTEM ZUM KÜHLEN EINES FAHRZEUGBAUTEILS, VERFAHREN ZUM BETRIEB EINES KÜHLSYSTEMS UND FAHRZEUG MIT EINEM KÜHLSYSTEM
SYSTÈME DE REFROIDISSEMENT DESTINÉ AU REFROIDISSEMENT D'UN COMPOSANT DE VÉHICULE, PROCÉDÉ PERMETTANT DE FAIRE FONCTIONNER UN SYSTÈME DE REFROIDISSEMENT ET VÉHICULE COMPRENANT UN SYSTÈME DE REFROIDISSEMENT

(43) Date of publication of application: 06.12.2023
(73) Proprietor: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: BERGMAN, Ulf, 423 38 TORSLANDA (SE); JÖNSSON, Mikael, 439 94 ONSALA (SE)
(74) Representative: Zacco Sweden AB

(56) References cited:
- US-A1- 2015 217 622
- US-A1- 2015 258 875
- US-A1- 2017 218 833
- US-A1- 2017 259 833

## Description

### TECHNICAL FIELD

The present invention relates to a cooling system for cooling a vehicle component.

The cooling system comprises a main cooling circuit connected to the vehicle component and a temporary cooling circuit connected to the vehicle component. The cooling system is configured for being operated in a normal operational state by means of the main cooling circuit. The invention further relates to a method for operating a cooling system for cooling a vehicle component and a vehicle comprising a cooling system for cooling a vehicle component.

### BACKGROUND

Vehicle heating and cooling systems are commonly used in vehicle applications for controlling the temperature ranges of different critical vehicle components, such as for example vehicle control units, battery units, power electronics units, and other types of vehicle units or components being part of the vehicle construction. In for example new energy vehicles, such as hybrid or electric vehicles, including battery electric vehicles, fuel-cell electric vehicles and plug-in hybrid electric vehicles, the high voltage battery components used for providing energy to the electric motors as well as power electronic components and control units need to be temperature controlled. The temperature controlling may in normal conditions depend on for example the driving conditions of the vehicle, the ambient temperature, and the type of components used in the vehicle system. The thermal management of the vehicle is constructed for cooling or heating the respective vehicle systems.

For new energy vehicles, the thermal management systems need a redesign compared to the systems used in traditional vehicles with internal combustion engines. These systems are often complex in design and construction, involving a high number of components that take up space in the vehicle and increase the weight of the vehicle construction. This leads to component packaging problems and weight issues, and further, the thermal management systems are often expensive and non-flexible in construction.

In new energy vehicle applications, there is a high demand on cooling critical vehicle components, and cooling circuits with heat transfer fluid are operated to control the temperature levels of the vehicle components. One example of critical vehicle components that need temperature control are central processing units (CPU). It is difficult to predict the exact temperature of a CPU, and the functionality of the CPU is not derated with increased temperature. When being overheated, the CPU fails permanently at high costs and risk of functional loss during operation.

Upon increasing temperature of the CPU or other critical vehicle component, it is essential to cool the CPU or vehicle component to a suitable operational temperature. If a cooling circuit that is controlling the temperature of the vehicle component is malfunctioning, there is a high risk for overheating the vehicle component.

A malfunction of the cooling system may for example be a leakage or blockage of the cooling circuit, leading to inefficient cooling of the critical vehicle component. In current systems used, it is however difficult to detect and quickly act upon a leakage or blockage of a cooling circuit. There is thus a need for improved cooling systems, where the systems are simple in design and construction with fewer components compared to current systems used, and where the system further is designed to act quickly upon malfunctioning cooling in order to establish efficient cooling of a critical vehicle component even if the cooling circuit operated in normal conditions is malfunctioning.

Patent publication US 2015/0217622 A1 discloses a thermal management system for a vehicle, where the system is cooling a plurality of cooling target devices. To cool the respective cooling target devices, a coolant to circulate through the respective cooling target devices is switchable among the devices via a switching valve.

Patent publication US 2017/0218833 A1 discloses a two-pump apparatus including two pumps and a circuit-changing valve connected to two cooling circuits, where the valve is controlled by a pressure differential created by the pumps.

Patent publication US 2017/0259833 A1 discloses a vehicle cooling system, where a coolant is circulating in a first cooling circuit and in a second cooling circuit. A first heat source to be cooled may be arranged in the first cooling circuit and a second heat source to be cooled may be arranged in the second cooling circuit.

### SUMMARY

An object of the present invention is to provide a cooling system for cooling a vehicle component, a method for operating a cooling system for cooling a vehicle component, and a vehicle comprising a cooling system for cooling a vehicle component, where the previously mentioned problems are avoided. This object achieved by the features of the independent claims. The dependent claims contain further developments of the cooling system for cooling a vehicle component and the method for operating a cooling system for cooling a vehicle component.

The invention concerns a cooling system for cooling a vehicle component. The cooling system comprises a main cooling circuit connected to the vehicle component and a temporary cooling circuit connected to the vehicle component. The cooling system is configured for being operated in a normal operational state by means of the main cooling circuit, or in a redundant operational state by means of the temporary cooling circuit upon malfunction of the main cooling circuit. The cooling system comprises a valve unit. The main cooling circuit is connected to the vehicle component via the valve unit in the normal operational state, and the temporary cooling circuit is connected to the vehicle component via the valve unit in the redundant operational state. The cooling system is configured for activating the temporary cooling circuit for cooling the vehicle component in the redundant operational state. The valve unit comprises a first outlet flow port and a first inlet flow port connected to the vehicle component, a second inlet flow port and a second outlet flow port connected to the main cooling circuit, and a third inlet flow port and a third outlet flow port connected to the temporary cooling circuit.

Advantages with these features are that the cooling system can be made simple in design and construction, and where the temporary cooling circuit is efficiently cooling the vehicle component upon malfunction of the main cooling circuit. A malfunction of the main cooling circuit may lead to inefficient cooling of the vehicle component, and with the valve unit, the cooling system is designed to act quickly upon a malfunctioning main cooling circuit. By using the temporary cooling circuit, efficient cooling of the vehicle component is enabled.

In one embodiment, the valve unit is adapted to disconnect the temporary cooling circuit from fluid communication with the vehicle component in the normal operational state, and the valve unit is adapted to disconnect the main cooling circuit from fluid communication with the vehicle component in the redundant operational state. The disconnection of the respective circuits is allowing only one circuit for cooling the vehicle component for an efficient operation of the cooling system, where the main cooling circuit is used for cooling the vehicle component in the normal operational state and the temporary cooling circuit is used for cooling the vehicle component in the redundant operational state.

In one embodiment, the cooling system comprises a further cooling circuit connected to the vehicle component and to the valve unit. Each one of the main cooling circuit and the temporary cooling circuit is connectable to the vehicle component via the valve unit and the further cooling circuit. The further cooling circuit is arranged for transporting heat transfer fluid to the vehicle component from the valve unit and from the vehicle component to the valve unit, both in the normal operational state and the redundant operational state. The further cooling circuit may be formed by conduits, pipes or other suitable connection means for transporting the heat transfer fluid from the valve unit to the vehicle component, and transporting the heat transfer fluid from the vehicle component to the valve unit. The vehicle component suitably comprises flow channels or similar arrangements for cooling the vehicle component with the heat transfer fluid.

In one embodiment, the valve unit comprises a valve body. The valve body is in the normal operational state arranged in a first valve position, and the valve body is in the redundant operational state arranged in a second valve position. In the first valve position, the second inlet flow port is in fluid communication with the first outlet flow port and the second outlet flow port is in fluid communication with the first inlet flow port. In the second valve position, the third inlet flow port is in fluid communication with the first outlet flow port and the third outlet flow port is in fluid communication with the first inlet flow port. The valve body may have any suitable configuration. As an example, the valve body is arranged as a sliding valve body or as a flap member.

In one embodiment, in the first valve position the valve body is blocking fluid communication between the third inlet flow port and the first outlet flow port and blocking fluid communication between the third outlet flow port and the first inlet flow port. In the second valve position the valve body is blocking fluid communication between the second inlet flow port and the first outlet flow port and blocking fluid communication between the second outlet flow port and the first inlet flow port.

In one embodiment, the valve body has a flap configuration. The valve body is configured for pivoting around a shaft structure upon displacement between the first valve position and second valve position.

In one embodiment, the cooling system comprises at least one sensor configured for detecting the malfunction of the main cooling circuit. When the malfunction occurs, the at least one sensor is configured to detect the malfunction in order for the cooling system to change from the normal operational state to the redundant operational state.

In one embodiment, the malfunction of the main cooling circuit is a leakage of heat transfer fluid from the main cooling circuit, or a blockage of heat transfer fluid in the main cooling circuit. The at least one sensor is a pressure sensor, a temperature sensor and/or a flow sensor connected to the main cooling circuit. The at least one sensor is configured for detecting the leakage or blockage of the main cooling circuit. The system is designed to detect and quickly act upon a leakage or blockage of the main cooling circuit by the at least one sensor. A combination of different types of sensors may be used in the main cooling system for an efficient and fast detection of the malfunction.

In one embodiment, the temporary cooling circuit comprises a storage unit configured for holding a volume of heat transfer fluid. The volume of heat transfer fluid is arranged as a thermal buffer for cooling the vehicle component in the redundant operational state. The storage unit is used as a flow through cooling volume for heat transfer fluid. The volume of heat transfer fluid in the storage unit acts as a thermal buffer up to a specific cooling temperature of the vehicle component.

In one embodiment, the temporary cooling circuit comprises a pump for circulating heat transfer fluid in the temporary cooling circuit to the vehicle component and through the storage unit in the redundant operational state. The cooling system is configured for activating the pump upon detection of the malfunction of the main cooling circuit. The cooling system is configured for activating the pump upon detection of the malfunction of the main cooling circuit. The pump may have any suitable configuration for transporting heat transfer fluid, and the flow rate of heat transfer fluid from the pump may be determined depending on for example the volume of heat transfer fluid in the storage unit, the temperature of the heat transfer fluid in the storage unit, and the temperature of the vehicle component.

In one embodiment, in the normal operational state the main cooling circuit is fully separated from the temporary cooling circuit by the valve unit, and in the redundant operational state the temporary cooling circuit is fully separated from the main cooling circuit by the valve unit. The separation of the respective circuits is preventing flow between the circuits and only allowing the main cooling circuit for cooling the vehicle component in the normal operational state and only allowing the temporary cooling circuit for cooling the vehicle component in the redundant operational state.

In one embodiment, the valve unit is configured as a pressure operated passive valve, where upon activation of the temporary cooling circuit for cooling the vehicle component in the redundant operational state, pressure from circulated heat transfer fluid in the temporary cooling circuit is operating the valve unit to connect the temporary cooling circuit into fluid communication with the vehicle component and disconnect the main cooling circuit from fluid communication with the vehicle component. The valve body may be arranged as a flap member operated by fluid pressure, and the valve body may have a dual flap configuration with a first valve flap and a second valve flap, where the first valve flap and second valve flap are connected to each other via a shaft structure. The valve body with the valve flaps may be arranged to pivot around the shaft structure upon displacement between the first valve position and second valve position.

The invention further concerns a method for operating a cooling system for cooling a vehicle component. The cooling system comprises a main cooling circuit connected to the vehicle component, a temporary cooling circuit connected to the vehicle component, and a valve unit. The valve unit comprises a first outlet flow port and a first inlet flow port connected to the vehicle component, a second inlet flow port and a second outlet flow port connected to the main cooling circuit, and a third inlet flow port and a third outlet flow port connected to the temporary cooling circuit. The valve unit comprises a valve body. The cooling system is configured for being operated in a normal operational state, or in a redundant operational state upon malfunction of the main cooling circuit. The method comprises the steps: arranging the main cooling circuit in fluid communication with the vehicle component via the valve unit in the normal operational state; arranging the temporary cooling circuit in fluid communication with the vehicle component via the valve unit in the redundant operational state, and activating the temporary cooling circuit for cooling the vehicle component in the redundant operational state; arranging the valve body in a first valve position in the normal operational state, where in the first valve position the second inlet flow port is in fluid communication with the first outlet flow port and the second outlet flow port is in fluid communication with the first inlet flow port; arranging the valve body in a second valve position in the redundant operational state, where in the second valve position the third inlet flow port is in fluid communication with the first outlet flow port and the third outlet flow port is in fluid communication with the first inlet flow port.

Advantages with the method are that the cooling system can be made simple in design and construction, where the temporary cooling circuit is efficiently cooling the vehicle component upon malfunction of the main cooling circuit. A malfunction of the main cooling system may lead to inefficient cooling of the vehicle component, and with the valve unit, the cooling system is designed to act quickly upon a malfunctioning main cooling circuit, and through the temporary cooling circuit efficient cooling of the vehicle component is established. The valve body may have any suitable configuration. As an example, the valve body is arranged as a sliding valve body or as a flap member.

In one embodiment, the method further comprises the steps: disconnecting the temporary cooling circuit from fluid communication with the vehicle component by the valve unit in the normal operational state; disconnecting the main cooling circuit from fluid communication with the vehicle component by the valve unit in the redundant operational state. The disconnection of the respective circuits is allowing only one circuit for cooling the vehicle component for an efficient operation of the cooling system.

In one embodiment, the method further comprises the steps: blocking fluid communication between the third inlet flow port and the first outlet flow port and blocking fluid communication between the third outlet flow port and the first inlet flow port by the valve body in the first valve position; blocking fluid communication between the second inlet flow port and the first outlet flow port and blocking fluid communication between the second outlet flow port and the first inlet flow port by the valve body in the second valve position.

In one embodiment, the cooling system comprises at least one sensor configured for detecting the malfunction of the main cooling circuit. The malfunction of the main cooling circuit is a leakage of heat transfer fluid from the main cooling circuit or a blockage of heat transfer fluid in the main cooling circuit. The at least one sensor is a pressure sensor, a temperature sensor, and/or a flow sensor connected to the main cooling circuit. The method further comprises the step: detecting the leakage or blockage of the main cooling circuit by the at least one sensor. When the malfunction occurs, the at least one sensor is detecting the malfunction in order to change from the normal operational state to the redundant operational state. The system is designed to detect and quickly act upon a leakage or blockage of the main cooling circuit by the at least one sensor. The main cooling circuit may be designed with a combination of different types of sensors for an efficient and fast detection of the leakage or blockage.

In one embodiment, the temporary cooling circuit comprises a storage unit configured for holding a volume of heat transfer fluid. The volume of heat transfer fluid is arranged as a thermal buffer for cooling the vehicle component in the redundant operational state. The temporary cooling circuit comprises a pump for circulating heat transfer fluid in the temporary cooling circuit to the vehicle component and through the storage unit in the redundant operational state. The method further comprises the step: activating the pump upon detection of the malfunction of the main cooling circuit. The storage unit is used as a flow through cooling volume for heat transfer fluid. The volume of heat transfer fluid in the storage unit acts as a thermal buffer up to a specific cooling temperature of the vehicle component. The cooling system is configured for activating the pump upon detection of the malfunction of the main cooling circuit. The pump may have any suitable configuration for transporting heat transfer fluid.

In one embodiment, the method further comprises the steps: fully separating the main cooling circuit from the temporary cooling circuit by the valve unit in the normal operational state; fully separating the temporary cooling circuit from the main cooling circuit by the valve unit in the redundant operational state. The separation of the respective circuits is preventing flow between the circuits and only allowing the main cooling circuit for cooling the vehicle component in the normal operational state and only allowing the temporary cooling circuit for cooling the vehicle component in the redundant operational state.

In one embodiment, the valve unit is configured as a pressure operated passive valve. The method further comprises the steps: operating the valve unit by pressure from circulated heat transfer fluid in the temporary cooling circuit upon activation of the temporary cooling circuit for cooling the vehicle component in the redundant operational state, wherein the valve unit is connecting the temporary cooling circuit into fluid communication with the vehicle component and disconnecting the main cooling circuit from fluid communication with the vehicle component. The valve body may be arranged as a flap member operated by fluid pressure, and the valve body may have a dual flap configuration with a first valve flap and a second valve flap, where the first valve flap and second valve flap are connected to each other via a shaft structure. The valve body with the valve flaps may be arranged to pivot around the shaft structure upon displacement between the first valve position and second valve position.

The invention further concerns a vehicle comprising a cooling system for cooling a vehicle component described above.

### BRIEF DESCRIPTION OF DRAWINGS

The invention will be described in detail in the following, with reference to the attached drawings, in which
- Fig. 1: shows schematically, a system layout view of a cooling system, according to an embodiment,
- Fig. 2a-b: show schematically, system layout views of the cooling system in a normal operational state and a redundant operational state,
- Fig. 3: shows schematically, a perspective view of a cooling system, according to an embodiment,
- Fig. 4a-b: show schematically, perspective views of the cooling system in a normal operational state and a redundant operational state,
- Fig. 5a-b: show schematically, perspective views of a valve unit of the cooling system and a valve body of the valve unit, according to an embodiment, and
- Fig. 6a-b: show schematically, cross-sectional side views of the valve unit in the normal operational state and the redundant operational state.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

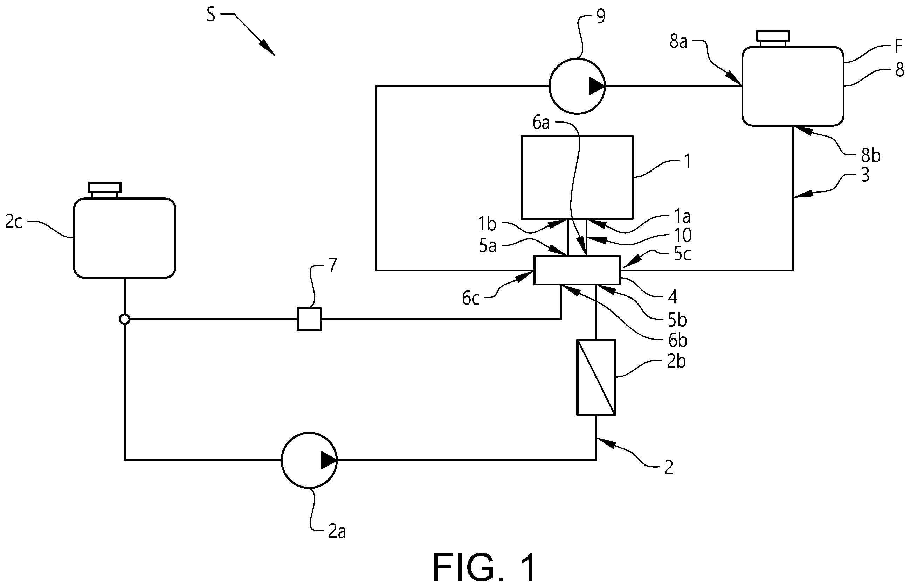

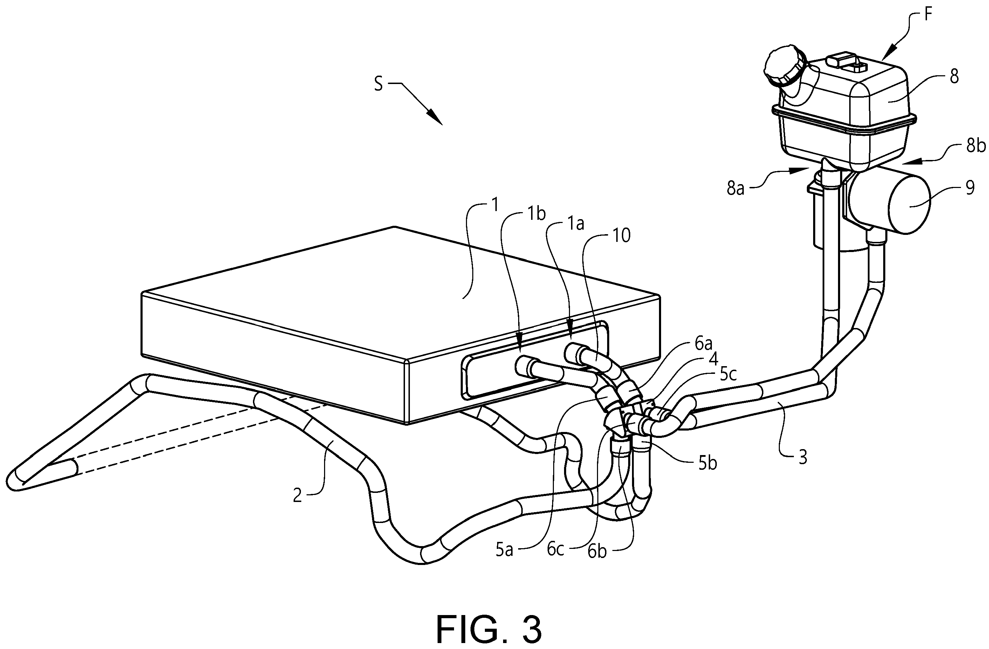

Figure 1 schematically shows a system layout view of a cooling system S for cooling a vehicle component 1. The cooling system S comprises a main cooling circuit 2 connected to the vehicle component 1 and a temporary cooling circuit 3 connected to the vehicle component 1. In figure 3, a perspective view of a cooling system S is schematically shown.

The vehicle component 1 may be any critical component or system of a vehicle that needs cooling during operation. Examples of vehicle components 1 that need cooling are vehicle control units including central processing units (CPU), battery units, power electronics units, and other types of vehicle units or components being part of the vehicle construction. One specific example of a critical vehicle components that need temperature control are CPUs, where it is difficult to predict the exact temperature of a CPU. The functionality of the CPU is not derated with increased temperature and when being overheated, the CPU fails permanently at high costs and risk of functional loss during operation.

As illustrated in for example figures 1 and 3, the cooling system S comprises a valve unit 4. The valve unit 4 is connecting the main cooling circuit 2 to the vehicle component 1. The valve unit 4 is further connecting the temporary cooling circuit 3 to the vehicle component 1.

The main cooling circuit may 2 may have any suitable configuration for cooling the vehicle component 1, and in figures 1 and 3 exemplified embodiments of system configurations are schematically shown. In the embodiment shown in figure 1, the main cooling circuit 2 comprises a circulation pump 2a for circulating heat transfer fluid F, a heat exchanger 2b for cooling the heat transfer fluid F, and an expansion bottle 2c. The circulation pump 2a may have any suitable configuration for transporting heat transfer fluid F. The heat exchanger 2b may be configured as a radiator, or alternatively as a heat exchanger connected to a separate non-illustrated cooling circuit or refrigerant circuit. The expansion bottle 2c may have any suitable configuration allowing the heat transfer fluid F to expand without causing the cooling system S to fail, and the expansion bottle 2c is preventing the cooling system S to becoming over-pressurised as the heat transfer fluid F heats up and expands. It should however be understood that the main cooling circuit 2 may comprise any suitable components needed for cooling the vehicle component 1 depending on the design and construction of the vehicle, and the shown components are only illustrating a possible system layout. In the embodiment shown in figure 3, the components of the main cooling circuit 2 have been omitted, which is indicated with the dashed section of the cooling circuit.

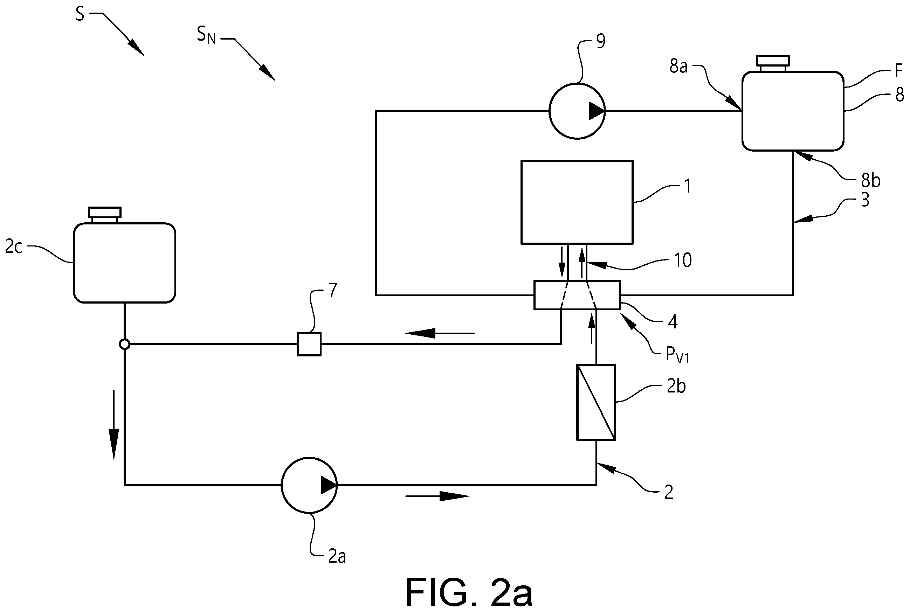

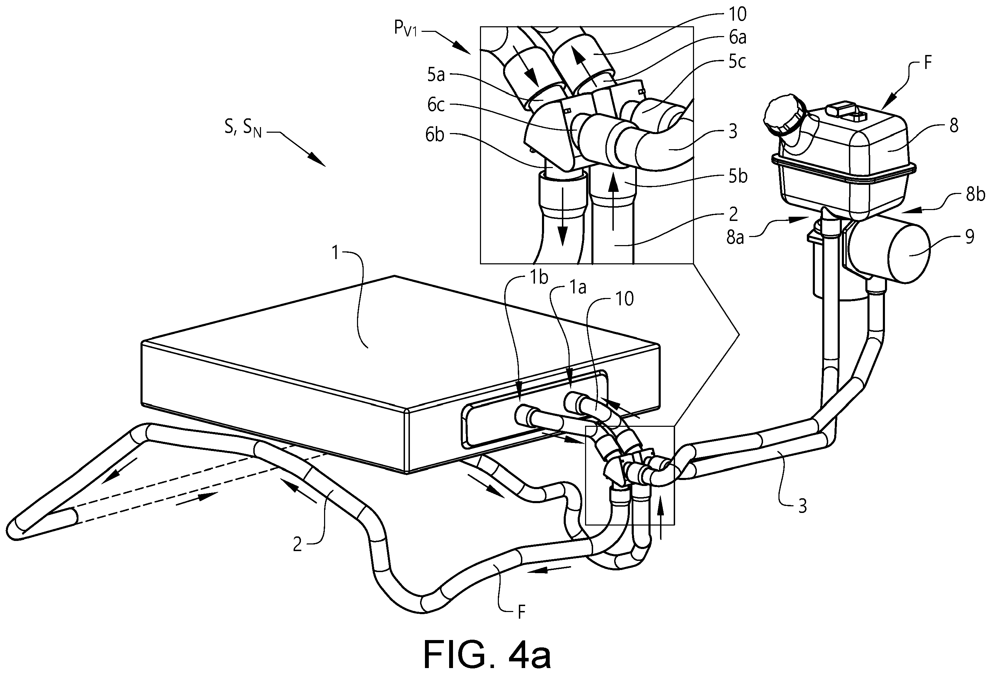

In normal operational conditions of the vehicle, the cooling system S is operated in a normal operational state S_{N} by means of the main cooling circuit 2 for cooling the vehicle component 1, as shown in figures 2a and 4a. In the normal operational state S_{N}, the main cooling circuit 2 is connected to the vehicle component 1 via the valve unit 4. In the normal operational state S_{N}, the heat transfer fluid F is allowed to circulate from the main cooling circuit 2 to the vehicle component 1 via the valve unit 4. The components of the main cooling circuit 2 are fluidly connected with conduits, pipes or other suitable connection means for transporting the heat transfer fluid F in the main cooling circuit 2, transporting the heat transfer fluid F from the main cooling circuit 2 to the vehicle component 1 via the valve unit 4, and transporting the heat transfer fluid F to the main cooling circuit 2 from the vehicle component 1 via the valve unit 4. The main cooling circuit 2 thus has the function to cool the vehicle component 1 during normal operating and driving conditions of the vehicle, as will be further described below.

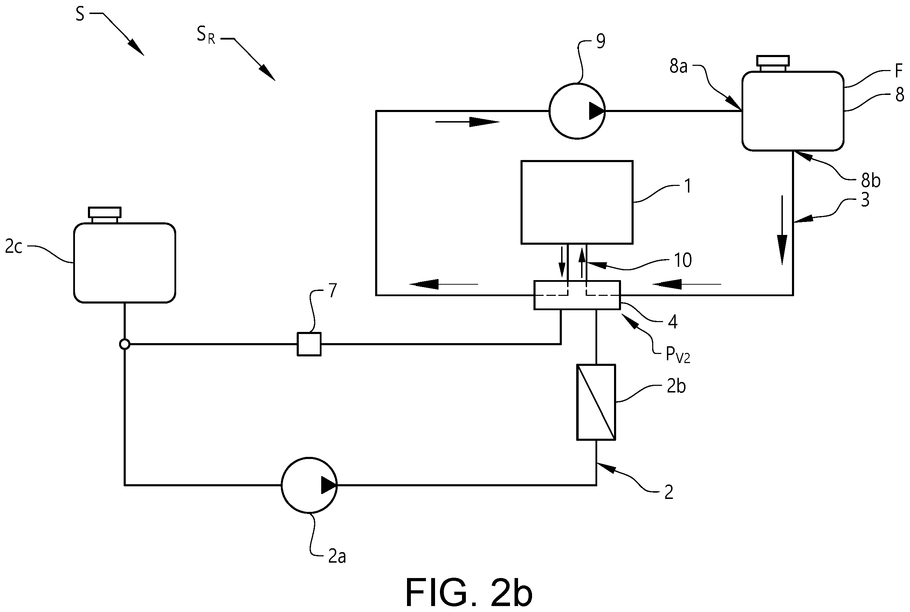

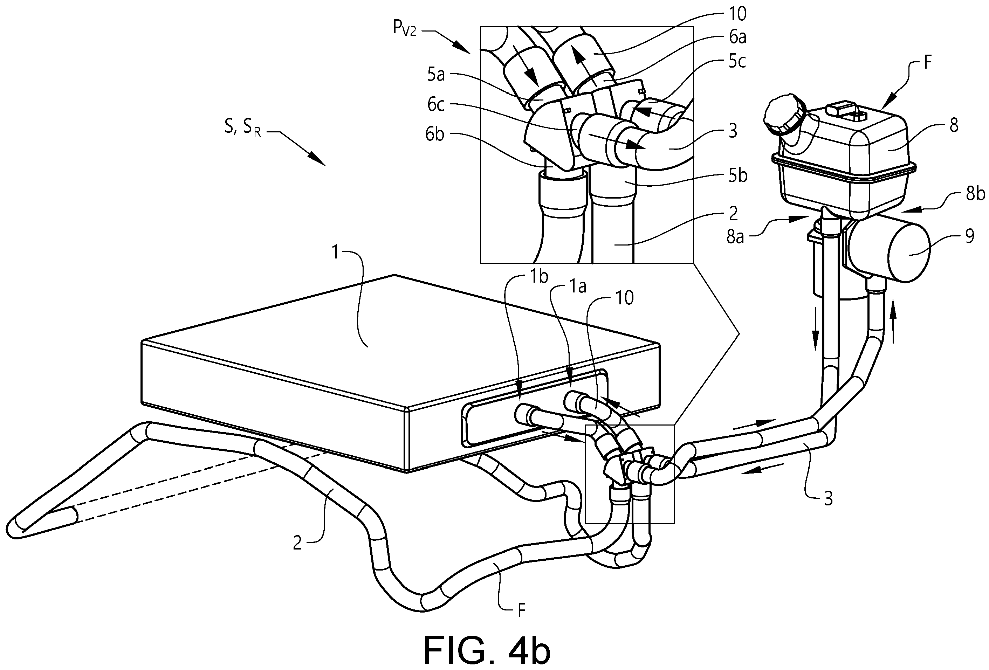

The cooling system S is further configured for being operated in a redundant operational state S_{R} by means of the temporary cooling circuit 3 upon malfunction of the main cooling circuit 2. The redundant operational state S_{R} is schematically illustrated in figures 2b and 4b, and the cooling system S is configured for activating the temporary cooling circuit 3 for cooling the vehicle component 1 in the redundant operational state S_{R}. The temporary cooling circuit 3 is connected to the vehicle component 1 via the valve unit 4 in the redundant operational state S_{R}, and the temporary cooling circuit 3 is when connected to the vehicle component 1 via the valve unit 4 in the redundant operational state S_{R} allowing the heat transfer fluid F to circulate from the temporary cooling circuit 3 to the vehicle component 1 via the valve unit 4.

Examples of malfunction of the main cooling circuit 2 is a leakage of heat transfer fluid F from the main cooling circuit 2 or a blockage of heat transfer fluid F in the main cooling circuit 2. A leakage of heat transfer fluid F from the main cooling circuit 2 may for example occur if any of the conduits are leaking, if any of the connections between components and conduits are leaking, or if any of the components are leaking. A leakage may occur if a conduit, a connection, or a components bursts or cracks, or if a seal breaks. A blockage of heat transfer fluid F in the main cooling circuit 2 is occurring if the flow of heat transfer fluid F is prevented from being transported, and may be caused by a malfunctioning component or if an object or contaminant is obstructing the flow path. A blockage of heat transfer fluid F in the main cooling circuit 2 may also occur if power supply to a component is not working properly, such as in the case of a power outage or broken fuse. One specific example of blockage is if the power supply to the circulating pump 2a is prevented, which in turn is preventing the heat transfer fluid F from being transported in the main cooling circuit 2.

The cooling system S comprises at least one sensor 7, as shown in for example figure 1. The sensor 7 is configured for detecting the malfunction of the main cooling circuit 2. The at least one sensor 7 is suitably a pressure sensor, a temperature sensor and/or a flow sensor connected to the main cooling circuit 2, and the at least one sensor 7 is arranged for detecting the leakage or blockage of the main cooling circuit 2.

As shown in for example figures 2b and 4b, the temporary cooling circuit 3 comprises a storage unit 8 configured for holding a volume of the heat transfer fluid F. The volume of heat transfer fluid F is arranged as a thermal buffer for cooling the vehicle component 1 in the redundant operational state S_{R}. The storage unit 8 is used as a flow through cooling volume for the heat transfer fluid F. The storage unit 8 comprises a flow inlet 8a and a flow outlet 8b. The heat transfer fluid F is in the redundant operational state S_{R} flowing into the storage unit 8 via the flow inlet 8a and out from the storage unit 8 via the flow outlet 8b. The temperature of the heat transfer fluid F in the storage unit 8 may as an example be kept at ambient temperature if the storage unit 8 is placed at a suitable location within the vehicle, and during a certain time period, the volume of heat transfer fluid F in the storage unit 8 acts as a thermal buffer up to a specific cooling temperature of the vehicle component 1. The storage unit 8 may be cooled with suitable cooling means. If a malfunction of the main cooling circuit 2 occurs, a user of the vehicle should have enough time to take action when the temporary cooling circuit 3 is activated in the redundant operational state S_{R}. The cooling system S is therefore suitably designed with a volume of heat transfer fluid F in the storage unit 8 and a flow rate of heat transfer fluid F in the temporary cooling circuit 3 to allow the user to take action and drive the vehicle to a safe location. As a non-limiting example, a realistic reaction time for a user may be at least 2 to 4 minutes, allowing the user to stop safely in most driving scenarios.

The temporary cooling circuit 3 further comprises a pump 9 for circulating heat transfer fluid F in the temporary cooling circuit 3 to the vehicle component 1 and through the storage unit 8 in the redundant operational state S_{R}. The cooling system S is configured for activating the pump 9 upon detection of the malfunction of the main cooling circuit 2, as will be further described below. The pump 9 may have any suitable configuration for transporting heat transfer fluid F, and the flow rate of heat transfer fluid F from the pump may be determined depending on for example the volume of heat transfer fluid in the storage unit 8, the temperature of the heat transfer fluid in the storage unit 8, and the temperature of the vehicle component 1. The pump 9 may be arranged in the flow path of the temporary cooling circuit 3 before or after the storage unit 8 depending on the design of the cooling system S. The pump 9 may further be arranged in connection to the storage unit 8 as shown in the embodiment illustrated in figure 3. In alternative non-illustrated embodiments, the pump 9 may be arranged within the storage unit 8, or be structurally integrated with the storage unit 8.

In the redundant operational state S_{R}, the temporary cooling circuit 3 is connected to the vehicle component 1 via the valve unit 4, as illustrated in for example figures 2b and 4b. In the redundant operational state S_{R}, the heat transfer fluid F is allowed to circulate from the temporary cooling circuit 3 to the vehicle component 1 via the valve unit 4. The components of the temporary cooling circuit 3, such as the storage unit 8 and the pump 9, are fluidly connected with conduits, pipes or other suitable connection means for transporting the heat transfer fluid F in the temporary cooling circuit 3, transporting the heat transfer fluid F from the temporary cooling circuit 3 to the vehicle component 1 via the valve unit 4, and transporting the heat transfer fluid F to the temporary cooling circuit 3 from the vehicle component 1 via the valve unit 4.

The cooling system S suitably further comprises a non-illustrated control unit, and the control unit is steering and controlling the operation of the components and circuits of the cooling system S, such as the pump 9 and the valve 4.

The valve unit 4 is adapted to disconnect the temporary cooling circuit 3 from fluid communication with the vehicle component 1 in the normal operational state S_{N}, and to disconnect the main cooling circuit 2 from fluid communication with the vehicle component 1 in the redundant operational state S_{R}. When the main cooling circuit 2 is connected to and in fluid communication with the vehicle component 1 in the normal operational state S_{N}, the temporary cooling circuit 3 is prevented from being in fluid communication with the vehicle component 1 by the valve unit 4. In this way, the main cooling circuit 2 and the vehicle component 1 are forming a closed cooling circuit that is separated from the temporary cooling circuit 3 in the normal operational state S_{N}. When the temporary cooling circuit 3 is connected to and in fluid communication with the vehicle component 1 in the redundant operational state S_{R}, the main cooling circuit 2 is prevented from being in fluid communication with the vehicle component 1 by the valve unit 4. In this way, the temporary cooling circuit 3 and the vehicle component 1 are forming a closed cooling circuit that is separated from the main cooling circuit 2 in the redundant operational state S_{R}. With this valve configuration, the main cooling circuit 2 is fully separated from the temporary cooling circuit 3 by the valve unit 4 in the normal operational state S_{N}, and the temporary cooling circuit 3 is fully separated from the main cooling circuit 2 by the valve unit 4 in the redundant operational state S_{R}.

As shown in for example figures 1 and 3, the cooling system S comprises a further cooling circuit 10 connected to the vehicle component 1 and to the valve unit 4. Each one of the main cooling circuit 2 and the temporary cooling circuit 3 is connectable to the vehicle component 1 via the valve unit 4 and the further cooling circuit 10. The further cooling circuit 10 is arranged for transporting heat transfer fluid F to the vehicle component 1 from the valve unit 4 and from the vehicle component 1 to the valve unit 4 in the normal operational state S_{N} and the redundant operational state S_{R}, as indicated with arrows in figures 2a-b, 4a-b, and 6a-b. As understood from the figures, the further cooling circuit 10 is formed by conduits, pipes or other suitable connection means for transporting the heat transfer fluid F from the valve unit 4 to the vehicle component 1, and transporting the heat transfer fluid F from the vehicle component 1 to the valve unit 4. The vehicle component 1 suitably comprises non-illustrated flow channels or similar arrangements for cooling the vehicle component 1 with the heat transfer fluid F. In the illustrated embodiment, the vehicle component 1 comprises an inlet port 1a and an outlet port 1b connected to the further cooling circuit 10, and the flow channels or similar arrangements of the vehicle component 1 are connected to the inlet port 1a and outlet port 1b for enabling a flow of heat transfer fluid F through the vehicle component 1.

The valve unit may 4 have any suitable configuration for controlling the flow of heat transfer fluid F to and from the vehicle component 1. As shown in the embodiment illustrated in figures 1, 3, and 4a-b, the valve unit 4 comprises a first outlet flow port 6a and a first inlet flow port 5a connected to the vehicle component 1. The valve unit 4 further comprises a second inlet flow port 5b and a second outlet flow port 6b connected to the main cooling circuit 2, and a third inlet flow port 5c and a third outlet flow port 6c connected to the temporary cooling circuit 3.

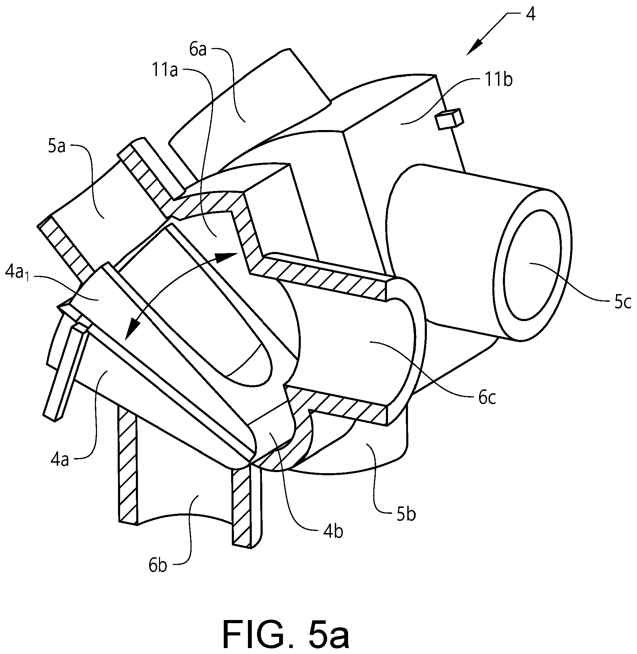

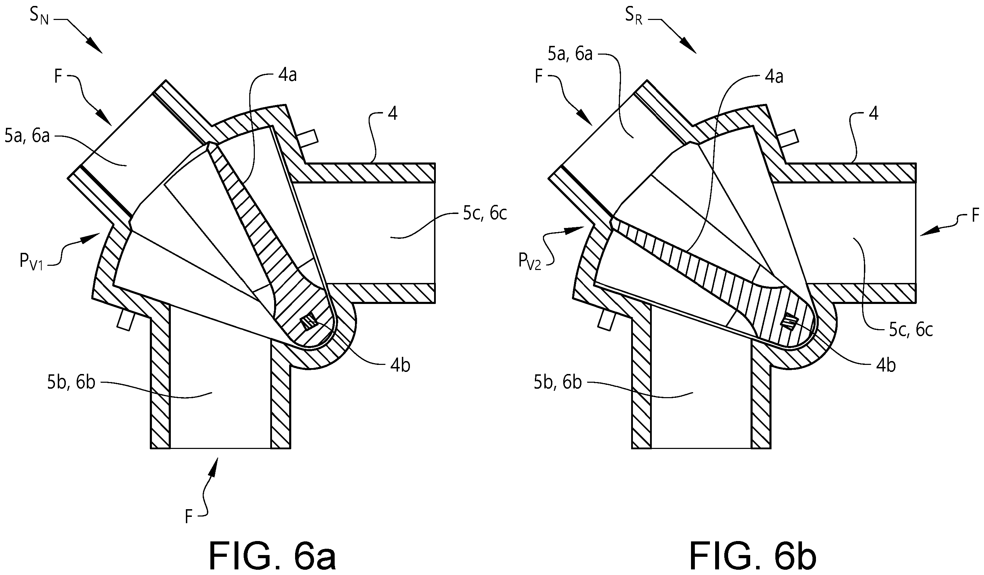

In one embodiment, the valve unit 4 comprises a valve body 4a, as shown in figures 5a-b and 6a-b. The valve body 4a is in the normal operational state S_{N} arranged in a first valve position P_{V1}, as shown in figure 6a. In the first valve position P_{V1}, the second inlet flow port 5b is in fluid communication with the first outlet flow port 6a and the second outlet flow port 6b is in fluid communication with the first inlet flow port 5a. The first valve position P_{V1} is enabling a circulating flow of heat transfer fluid from the main cooling circuit 2 to the vehicle component 1 via the valve unit 4 and from the vehicle component 1 to the main cooling circuit 2, as indicated with arrows in figures 2a and 4a. In the first valve position P_{V1}, the valve body 4a is blocking fluid communication between the third inlet flow port 5c and the first outlet flow port 6a and blocking fluid communication between the third outlet flow port 6c and the first inlet flow port 5a. In this way, flow from the temporary cooling circuit 3 to the vehicle component 1 is prevented.

The valve body 4a is in the redundant operational state S_{R} is arranged in a second valve position P_{V2}, as shown in figure 6b. In the second valve position P_{V2}, the third inlet flow port 5c is in fluid communication with the first outlet flow port 6a and the third outlet flow port 6c is in fluid communication with the first inlet flow port 5a. The second valve position P_{V2} is enabling a circulating flow of heat transfer fluid from the temporary cooling circuit 3 to the vehicle component 1 via the valve unit 4 and from the vehicle component 1 to the temporary cooling circuit 3, as indicated with arrows in figures 2b and 4b. In the second valve position P_{V2}, the valve body 4a is blocking fluid communication between the second inlet flow port 5b and the first outlet flow port 6a and blocking fluid communication between the second outlet flow port 6b and the first inlet flow port 5a. In this way, flow from the main cooling circuit 2 to the vehicle component 1 is prevented.

The valve body 4a of the valve unit 4 may be connected to an actuator or similar device for displacing the valve body 4a between the first valve position P_{V1} and the second valve position P_{V2}. However, in the embodiment illustrated in figures 5a-b and 6a-b, the valve unit 4 is configured as a pressure operated passive valve, where the valve body 4a is arranged as a flap member operated by fluid pressure. The valve unit 4 of the illustrated embodiment comprises a first chamber 11a and a second chamber 11b**,** as shown in figure 5a. The first chamber 11a and the second chamber 11b are separated from each other and there is thus no fluid transport between the chambers. The first chamber 11a is in fluid communication with the first inlet flow port 5a, second outlet flow port 6b, and third outlet flow port 6c. The second chamber 11b is in fluid communication with the second inlet flow port 5b, third inlet flow port 5c, and first outlet flow port 6a.

The valve body 4a may be constructed with a flap configuration, where the valve body 4a is configured for pivoting around a shaft structure 4b upon displacement between a first valve position P_{V1} and a second valve position P_{V2}.

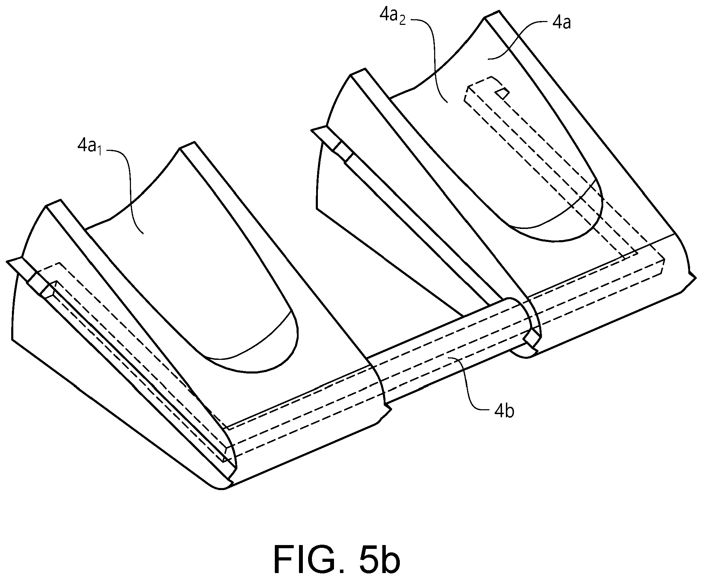

In the embodiment shown in figure 5b, the valve body 4a has a dual flap configuration with a first valve flap 4a₁ and a second valve flap 4a₂. The first valve flap 4a₁ and a second valve flap 4a₂ are connected to each other via a shaft structure 4b, and the valve body 4a with the valve flaps is pivoting around the shaft structure 4b upon displacement between the first valve position P_{V1} and second valve position P_{V2}.

In the first valve position P_{V1} the valve body 4a is arranged in a first angular position, and in the second valve position P_{V2} the valve body 4a is arranged in a second angular position, as understood from figures 6a-b. As an example, the angular difference of the valve body 4a between the first valve position P_{V1} and the second valve position P_{V2} may be in the range 10-180°, preferably in the range 20-45°.

The valve unit 4 is arranged in the first valve position P_{V1} as shown in figure 6a in the normal operational state S_{N} during normal operation conditions of the vehicle. Upon malfunction of the main cooling circuit 2, the temporary cooling circuit 3 is activated for cooling the vehicle component 1 in the redundant operational state S_{R}. Fluid pressure from circulated heat transfer fluid F in the temporary cooling circuit 3 is operating the valve unit 4 to connect the temporary cooling circuit 3 into fluid communication with the vehicle component 1 and disconnect the main cooling circuit 2 from fluid communication with the vehicle component 1. The pressure from circulated heat transfer fluid F in the temporary cooling circuit 3 is established by operating the pump 9 and the established pressure in the temporary cooling circuit 3 is forcing the valve body 4a of the valve unit 4 to shift position from the first valve position P_{V1} to the second valve position P_{V2}. It should be understood that the pressure in the main cooling circuit 2 upon malfunction may decrease due to the occurred leakage or blockage, and a higher pressure in the temporary cooling circuit 3 than in the main cooling circuit 2 is forcing the valve body 4a to shift from the first valve position P_{V1} to the second valve position P_{V2}. Upon malfunction of the main cooling circuit 2, for example if a blockage occurs, the circulation pump 2a may be shut off to reduce pressure in the main cooling circuit 2.

The valve unit may have other configurations than the one described. The valve body may instead be arranged as a sliding valve body that is allowing or blocking fluid transportation through the chambers. The valve unit may be arranged with two valves instead of one valve body with two chambers, where each of the two valves is provided with one chamber. The valve unit or valve units may be actuated with fluid pressure or by an actuator, such as an electric motor, stepper motor, or other suitable actuating device. In other alternative embodiments, the valve unit or valve units may be arranged as magnetic flow valves activated through supply of electric current.

When operating the cooling system S in the normal operational state S_{N} the main cooling circuit 2 is cooling the vehicle component 1, as shown in figures 2a and 4a, and the temporary cooling circuit 3 is disconnected from the vehicle component 1. In the normal operational state S_{N}, the main cooling circuit 2 is arranged in fluid communication with the vehicle component 1 via the valve unit 4, and the temporary cooling circuit 3 is disconnected from fluid communication with the vehicle component 1 by the valve unit 4.

With the configuration of the valve unit 4 illustrated in figures 5a-b and 6a-b, the valve body 4a is arranged in a first valve position P_{V1} in the normal operational state S_{N}, and in the first valve position P_{V1} the second inlet flow port 5b is in fluid communication with the first outlet flow port 6a and the second outlet flow port 6b is in fluid communication with the first inlet flow port 5a. In the first valve position P_{V1}, the fluid communication between the third inlet flow port 5c and the first outlet flow port 6a is blocked by the valve unit 4 and the fluid communication between the third outlet flow port 6c and the first inlet flow port 5a is blocked by the valve body 4a. The valve unit 4 is fully separating the main cooling circuit 2 from the temporary cooling circuit 3 in the normal operational state S_{N}.

When a malfunction of the main cooling circuit 2 occurs, such as a leakage or a blockage, the malfunction is detected by the at least one sensor 7. Upon detection of the malfunction by the at least one sensor 7, the cooling system S is changing from the normal operational state S_{N} to the redundant operational state S_{R}, as shown in figures 2b and 4b. When changing from the normal operational state S_{N} to the redundant operational state S_{R}, the temporary cooling circuit 3 is instead cooling the vehicle component 1, and the malfunctioning main cooling circuit 2 is disconnected from the vehicle component 1. Thus, in the redundant operational state S_{R} the temporary cooling circuit 3 is arranged in fluid communication with the vehicle component 1 via the valve unit 4, and the temporary cooling circuit 3 is activated for cooling the vehicle component 1. The activation of the temporary cooling circuit 3 includes activation of the pump 9 for circulating heat transfer fluid F in the temporary cooling circuit 3 to the vehicle component 1 and through the storage unit 8. The pump 9 is in this way activated upon detection of the malfunction of the main cooling circuit 2. The stored volume of heat transfer fluid F in the storage volume 8 is arranged as a thermal buffer for cooling the vehicle component 1 in the redundant operational state S_{R}, and the heat transfer fluid F in the storage volume 8 is drawn into the conduits of the temporary cooling circuit 3 and transported to the vehicle component 1 for cooling the vehicle component 1. Further in the redundant operational state S_{R}, the main cooling circuit 2 is disconnected from fluid communication with the vehicle component 1 by the valve unit 4. With the configuration of the valve unit 4 illustrated in figures 5a-b and 6a-b, the valve body 4a is arranged in the second valve position P_{V2} in the redundant operational state S_{R}, and in the second valve position P_{V2} the third inlet flow port 5c is in fluid communication with the first outlet flow port 6a and the third outlet flow port 6c is in fluid communication with the first inlet flow port 5a. In the second valve position P_{V2}, the fluid communication between the second inlet flow port 5b and the first outlet flow port 6a is blocked by the valve unit 4 and the fluid communication between the second outlet flow port 6b and the first inlet flow port 5a is blocked by the valve body 4a. The valve unit 4 is fully separating the temporary cooling circuit 3 from the main cooling circuit 2 in the redundant operational state S_{R}.

As described above, the valve unit 4 is configured as a pressure operated passive valve, and the valve unit 4 is operated by pressure from circulated heat transfer fluid F in the temporary cooling circuit 3 upon activation of the temporary cooling circuit 3 for cooling the vehicle component 1 in the redundant operational state S_{R}. In this way, the valve unit 4 is connecting the temporary cooling circuit 3 into fluid communication with the vehicle component 1 and disconnecting the main cooling circuit 2 from fluid communication with the vehicle component 1.

It will be appreciated that the above description is merely exemplary in nature and is not intended to limit the present invention, its application or uses. While specific examples have been described in the specification and illustrated in the drawings, it will be understood by those of ordinary skill in the art that various changes may be made and equivalents may be substituted for elements thereof without departing from the scope of the present invention as defined in the claims. Furthermore, modifications may be made to adapt a particular situation or material to the teachings of the present disclosure without departing from the essential scope thereof. Therefore, it is intended that the present invention not be limited to the particular examples illustrated by the drawings and described in the specification as the best mode presently contemplated for carrying out the teachings of the present invention, but that the scope of the present invention is defined by the appended claims. Reference signs mentioned in the claims should not be seen as limiting the extent of the matter protected by the claims, and their sole function is to make claims easier to understand.

### REFERENCE SIGNS

- 1:: Vehicle component
- 1a:: Inlet port
- 1b:: Outlet port
- 2:: Main cooling circuit
- 2a:: Circulation pump
- 2b:: Heat exchanger
- 2c:: Expansion bottle
- 3:: Temporary cooling circuit
- 4:: Valve unit
- 4a:: Valve body
- 4a₁:: First valve flap
- 4a₂:: Second valve flap
- 4b:: Shaft structure
- 5a:: First inlet flow port
- 5b:: Second inlet flow port
- 5c:: Third inlet flow port
- 6a:: First outlet flow port
- 6b:: Second outlet flow port
- 6c:: Third outlet flow port
- 7:: Sensor
- 8:: Storage unit
- 8a:: Flow inlet
- 8b:: Flow outlet
- 9:: Pump
- 10:: Further cooling circuit
- 11a:: First chamber
- 11b:: Second chamber
- F:: Heat transfer fluid
- S:: Cooling system
- P_{V1}:: First valve position
- P_{V2}:: Second valve position
- S_{N}:: Normal operational state
- S_{R}:: Redundant operational state

## Claims

1. A cooling system (S) for cooling a vehicle component (1), wherein the cooling system (S) comprises a main cooling circuit (2) connected to the vehicle component (1) and a temporary cooling circuit (3) connected to the vehicle component (1),
wherein the cooling system (S) is configured for being operated in a normal operational state (S_{N}) by means of the main cooling circuit (2), or in a redundant operational state (S_{R}) by means of the temporary cooling circuit (3) upon malfunction of the main cooling circuit (2),
wherein the cooling system (S) comprises a valve unit (4), wherein the main cooling circuit (2) is connected to the vehicle component (1) via the valve unit (4) in the normal operational state (S_{N}), and wherein the temporary cooling circuit (3) is connected to the vehicle component (1) via the valve unit (4) in the redundant operational state (S_{R}),
wherein the cooling system (S) is configured for activating the temporary cooling circuit (3) for cooling the vehicle component (1) in the redundant operational state (S_{R}),
**characterized in that** the valve unit (4) comprises a first outlet flow port (6a) and a first inlet flow port (5a) connected to the vehicle component (1), wherein the valve unit (4) comprises a second inlet flow port (5b) and a second outlet flow port (6b) connected to the main cooling circuit (2), and wherein the valve unit (4) comprises a third inlet flow port (5c) and a third outlet flow port (6c) connected to the temporary cooling circuit (3).

2. The cooling system (S) according to claim 1,
wherein the valve unit (4) is adapted to disconnect the temporary cooling circuit (3) from fluid communication with the vehicle component (1) in the normal operational state (S_{N}), and wherein the valve unit (4) is adapted to disconnect the main cooling circuit (2) from fluid communication with the vehicle component (1) in the redundant operational state (S_{R}).

3. The cooling system (S) according to claim 1 or 2,
wherein the cooling system (S) comprises a further cooling circuit (10) connected to the vehicle component (1) and to the valve unit (4), wherein each one of the main cooling circuit (2) and the temporary cooling circuit (3) is connectable to the vehicle component (1) via the valve unit (4) and the further cooling circuit (10).

4. The cooling system (S) according to any preceding claim,
wherein the valve unit (4) comprises a valve body (4a), wherein the valve body (4a) in the normal operational state (S_{N}) is arranged in a first valve position (P_{V1}) and wherein the valve body (4a) in the redundant operational state (S_{R}) is arranged in a second valve position (P_{V2}),
wherein in the first valve position (P_{V1}) the second inlet flow port (5b) is in fluid communication with the first outlet flow port (6a) and the second outlet flow port (6b) is in fluid communication with the first inlet flow port (5a),
wherein in the second valve position (P_{V2}) the third inlet flow port (5c) is in fluid communication with the first outlet flow port (6a) and the third outlet flow port (6c) is in fluid communication with the first inlet flow port (5a).

5. The cooling system (S) according to claim 4,
wherein in the first valve position (P_{V1}) the valve body (4a) is blocking fluid communication between the third inlet flow port (5c) and the first outlet flow port (6a) and blocking fluid communication between the third outlet flow port (6c) and the first inlet flow port (5a),
wherein in the second valve position (P_{V2}) the valve body (4a) is blocking fluid communication between the second inlet flow port (5b) and the first outlet flow port (6a) and blocking fluid communication between the second outlet flow port (6b) and the first inlet flow port (5a).

6. The cooling system (S) according to claim 4 or 5,
wherein the valve body (4a) has a flap configuration, wherein the valve body (4a) is configured for pivoting around a shaft structure (4b) upon displacement between the first valve position (P_{V1}) and second valve position (Pv2).

7. The cooling system (S) according to any preceding claim,
wherein the cooling system (S) comprises at least one sensor (7) configured for detecting the malfunction of the main cooling circuit (2).

8. The cooling system (S) according to claim 7,
wherein the malfunction of the main cooling circuit (2) is a leakage of heat transfer fluid (F) from the main cooling circuit (2) or a blockage of heat transfer fluid (F) in the main cooling circuit (2), wherein the at least one sensor (7) is a pressure sensor, a temperature sensor and/or a flow sensor connected to the main cooling circuit (2), wherein the at least one sensor (7) is configured for detecting the leakage or blockage of the main cooling circuit (2).

9. The cooling system (S) according to any preceding claim,
wherein the temporary cooling circuit (3) comprises a storage unit (8) configured for holding a volume of heat transfer fluid (F), wherein the volume of heat transfer fluid (F) is arranged as a thermal buffer for cooling the vehicle component (1) in the redundant operational state (S_{R}).

10. The cooling system (S) according to claim 9,
wherein the temporary cooling circuit (3) comprises a pump (9) for circulating heat transfer fluid (F) in the temporary cooling circuit (3) to the vehicle component (1) and through the storage unit (8) in the redundant operational state (S_{R}), wherein the cooling system (S) is configured for activating the pump (9) upon detection of the malfunction of the main cooling circuit (2).

11. The cooling system (S) according to any preceding claim,
wherein in the normal operational state (S_{N}) the main cooling circuit (2) is fully separated from the temporary cooling circuit (3) by the valve unit (4), and wherein in the redundant operational state (S_{R}) the temporary cooling circuit (3) is fully separated from the main cooling circuit (2) by the valve unit (4).

12. The cooling system (S) according to any preceding claim,
wherein the valve unit (4) is configured as a pressure operated passive valve, wherein upon activation of the temporary cooling circuit (3) for cooling the vehicle component (1) in the redundant operational state (S_{R}) pressure from circulated heat transfer fluid (F) in the temporary cooling circuit (3) is operating the valve unit (4) to connect the temporary cooling circuit (3) into fluid communication with the vehicle component (1) and disconnect the main cooling circuit (2) from fluid communication with the vehicle component (1).

13. A method for operating a cooling system (S) for cooling a vehicle component (1), wherein the cooling system (S) comprises a main cooling circuit (2) connected to the vehicle component (1), a temporary cooling circuit (3) connected to the vehicle component (1), and a valve unit (4),
wherein the valve unit (4) comprises a first outlet flow port (6a) and a first inlet flow port (5a) connected to the vehicle component (1), wherein the valve unit (4) comprises a second inlet flow port (5b) and a second outlet flow port (6b) connected to the main cooling circuit (2), wherein the valve unit (4) comprises a third inlet flow port (5c) and a third outlet flow port (6c) connected to the temporary cooling circuit (3), wherein the valve unit (4) comprises a valve body (4a),
wherein the cooling system (S) is configured for being operated in a normal operational state (S_{N}), or in a redundant operational state (S_{R}) upon malfunction of the main cooling circuit (2), wherein the method comprises the steps:
arranging the main cooling circuit (2) in fluid communication with the vehicle component (1) via the valve unit (4) in the normal operational state (S_{N});
arranging the temporary cooling circuit (3) in fluid communication with the vehicle component (1) via the valve unit (4) in the redundant operational state (S_{R}), and activating the temporary cooling circuit (3) for cooling the vehicle component (1) in the redundant operational state (S_{R});
arranging the valve body (4a) in a first valve position (P_{V1}) in the normal operational state (S_{N}), wherein in the first valve position (P_{V1}) the second inlet flow port (5b) is in fluid communication with the first outlet flow port (6a) and the second outlet flow port (6b) is in fluid communication with the first inlet flow port (5a);
arranging the valve body (4a) in a second valve position (P_{V2}) in the redundant operational state (S_{R}), wherein in the second valve position (P_{V2}) the third inlet flow port (5c) is in fluid communication with the first outlet flow port (6a) and the third outlet flow port (6c) is in fluid communication with the first inlet flow port (5a).

14. The method according to claim 13,
wherein the method further comprises the steps: disconnecting the temporary cooling circuit (3) from fluid communication with the vehicle component (1) by the valve unit (4) in the normal operational state (S_{N});
disconnecting the main cooling circuit (2) from fluid communication with the vehicle component (1) by the valve unit (4) in the redundant operational state (S_{R}).

15. The method according to claim 13 or 14,
wherein the method further comprises the steps: blocking fluid communication between the third inlet flow port (5c) and the first outlet flow port (6a) and blocking fluid communication between the third outlet flow port (6c) and the first inlet flow port (5a) by the valve body (4a) in the first valve position (P_{V1});
blocking fluid communication between the second inlet flow port (5b) and the first outlet flow port (6a) and blocking fluid communication between the second outlet flow port (6b) and the first inlet flow port (5a) by the valve body (4a) in the second valve position (P_{V2}).

16. The method according to any of claims 13 to 15,
wherein the cooling system (S) comprises at least one sensor (7) configured for detecting the malfunction of the main cooling circuit (2), wherein the malfunction of the main cooling circuit (2) is a leakage of heat transfer fluid (F) from the main cooling circuit (2) or a blockage of heat transfer fluid (F) in the main cooling circuit (2), wherein the at least one sensor (7) is a pressure sensor, a temperature sensor and/or a flow sensor connected to the main cooling circuit (2), wherein the method further comprises the step: detecting the leakage or blockage of the main cooling circuit (2) by the at least one sensor (7).

17. The method according to any of claims 13 to 16,
wherein the temporary cooling circuit (3) comprises a storage unit (8) configured for holding a volume of heat transfer fluid (F), wherein the volume of heat transfer fluid (F) is arranged as a thermal buffer for cooling the vehicle component (1) in the redundant operational state (S_{R}), wherein the temporary cooling circuit (3) comprises a pump (9) for circulating heat transfer fluid (F) in the temporary cooling circuit (3) to the vehicle component (1) and through the storage unit (8) in the redundant operational state (S_{R}), wherein the method further comprises the step: activating the pump (9) upon detection of the malfunction of the main cooling circuit (2).

18. The method according to any of claims 13 to 17,
wherein the method further comprises the steps: fully separating the main cooling circuit (2) from the temporary cooling circuit (3) by the valve unit (4) in the normal operational state (S_{N});
fully separating the temporary cooling circuit (3) from the main cooling circuit (2) by the valve unit (4) in the redundant operational state (S_{R}).

19. The method according to any of claims 13 to 18,
wherein the valve unit (4) is configured as a pressure operated passive valve, wherein the method further comprises the steps: operating the valve unit (4) by pressure from circulated heat transfer fluid (F) in the temporary cooling circuit (3) upon activation of the temporary cooling circuit (3) for cooling the vehicle component (1) in the redundant operational state (S_{R}), wherein the valve unit (4) is connecting the temporary cooling circuit (3) into fluid communication with the vehicle component (1) and disconnecting the main cooling circuit (2) from fluid communication with the vehicle component (1).

20. A vehicle comprising a cooling system (S) for cooling a vehicle component (1), according to any of claims 1 to 12.

## Patentansprüche

1. Kühlsystem (S) zum Kühlen eines Fahrzeugbauteils (1), wobei das Kühlsystem (S) einen Hauptkühlkreislauf (2), der mit dem Fahrzeugbauteil (1) verbunden ist, und einen temporären Kühlkreislauf (3) umfasst, der mit dem Fahrzeugbauteil (1) verbunden ist,
wobei das Kühlsystem (S) dazu konfiguriert ist, in einem normalen Betriebszustand (S_{N}) mittels des Hauptkühlkreislaufes (2) oder bei einer Fehlfunktion des Hauptkühlkreislaufes (2) in einem redundanten Betriebszustand (S_{R}) mittels des temporären Kühlkreislaufes (3) betrieben zu werden,
wobei das Kühlsystem (S) eine Ventileinheit (4) umfasst, wobei der Hauptkühlkreislauf (2) in dem normalen Betriebszustand (S_{N}) über die Ventileinheit (4) mit dem Fahrzeugbauteil (1) verbunden ist und wobei der temporäre Kühlkreislauf (3) in dem redundanten Betriebszustand (S_{R}) über die Ventileinheit (4) mit dem Fahrzeugbauteil (1) verbunden ist,
wobei das Kühlsystem (S) zum Aktivieren des temporären Kühlkreislaufes (3) zum Kühlen des Fahrzeugbauteils (1) in dem redundanten Betriebszustand (S_{R}) konfiguriert ist,
**dadurch gekennzeichnet, dass** die Ventileinheit (4) einen ersten Auslassströmungsanschluss (6a) und einen ersten Einlassströmungsanschluss (5a) umfasst, die mit dem Fahrzeugbauteil (1) verbunden sind, wobei die Ventileinheit (4) einen zweiten Einlassströmungsanschluss (5b) und einen zweiten Auslassströmungsanschluss (6b) umfasst, die mit dem Hauptkühlkreislauf (2) verbunden sind, und wobei die Ventileinheit (4) einen dritten Einlassströmungsanschluss (5c) und einen dritten Auslassströmungsanschluss (6c) umfasst, die mit dem temporären Kühlkreislauf (3) verbunden sind.

2. Kühlsystem (S) nach Anspruch 1,
wobei die Ventileinheit (4) dazu angepasst ist, den temporären Kühlkreislauf (3) in dem normalen Betriebszustand (S_{N}) von einer Fluidkommunikation mit dem Fahrzeugbauteil (1) zu trennen, und wobei die Ventileinheit (4) dazu angepasst ist, den Hauptkühlkreislauf (2) in dem redundanten Betriebszustand (S_{R}) von der Fluidkommunikation mit dem Fahrzeugbauteil (1) zu trennen.

3. Kühlsystem (S) nach Anspruch 1 oder 2,
wobei das Kühlsystem (S) einen weiteren Kühlkreislauf (10) umfasst, der mit dem Fahrzeugbauteil (1) und mit der Ventileinheit (4) verbunden ist, wobei jeder von dem Hauptkühlkreislauf (2) und dem temporären Kühlkreislauf (3) über die Ventileinheit (4) und den weiteren Kühlkreislauf (10) mit dem Fahrzeugbauteil (1) verbindbar ist.

4. Kühlsystem (S) nach einem vorstehenden Anspruch,
wobei die Ventileinheit (4) einen Ventilkörper (4a) umfasst, wobei der Ventilkörper (4a) in dem normalen Betriebszustand (S_{N}) in einer ersten Ventilposition (P_{V1}) angeordnet ist und wobei der Ventilkörper (4a) in dem redundanten Betriebszustand (S_{R}) in einer zweiten Ventilposition (P_{V2}) angeordnet ist,
wobei in der ersten Ventilposition (P_{V1}) der zweite Einlassströmungsanschluss (5b) in Fluidkommunikation mit dem ersten Auslassströmungsanschluss (6a) steht und der zweite Auslassströmungsanschluss (6b) in Fluidkommunikation mit dem ersten Einlassströmungsanschluss (5a) steht,
wobei in der zweiten Ventilposition (P_{V2}) der dritte Einlassströmungsanschluss (5c) in Fluidkommunikation mit dem ersten Auslassströmungsanschluss (6a) steht und der dritte Auslassströmungsanschluss (6c) in Fluidkommunikation mit dem ersten Einlassströmungsanschluss (5a) steht.

5. Kühlsystem (S) nach Anspruch 4,
wobei in der ersten Ventilposition (P_{V1}) der Ventilkörper (4a) eine Fluidkommunikation zwischen dem dritten Einlassströmungsanschluss (5c) und dem ersten Auslassströmungsanschluss (6a) blockiert und eine Fluidkommunikation zwischen dem dritten Auslassströmungsanschluss (6c) und dem ersten Einlassströmungsanschluss (5a) blockiert,
wobei in der zweiten Ventilposition (P_{V2}) der Ventilkörper (4a) eine Fluidkommunikation zwischen dem zweiten Einlassströmungsanschluss (5b) und dem ersten Auslassströmungsanschluss (6a) blockiert und eine Fluidkommunikation zwischen dem zweiten Auslassströmungsanschluss (6b) und dem ersten Einlassströmungsanschluss (5a) blockiert.

6. Kühlsystem (S) nach Anspruch 4 oder 5,
wobei der Ventilkörper (4a) eine Klappenkonfiguration aufweist, wobei der Ventilkörper (4a) zum Schwenken um eine Wellenstruktur (4b) bei einer Verschiebung zwischen der ersten Ventilposition (P_{V1}) und der zweiten Ventilposition (P_{V2}) konfiguriert ist.

7. Kühlsystem (S) nach einem vorstehenden Anspruch,
wobei das Kühlsystem (S) mindestens einen Sensor (7) umfasst, der zum Detektieren der Fehlfunktion des Hauptkühlkreislaufes (2) konfiguriert ist.

8. Kühlsystem (S) nach Anspruch 7,
wobei die Fehlfunktion des Hauptkühlkreislaufes (2) eine Leckage von Wärmeübertragungsfluid (F) von dem Hauptkühlkreislauf (2) oder eine Blockierung von Wärmeübertragungsfluid (F) in dem Hauptkühlkreislauf (2) ist, wobei der mindestens eine Sensor (7) ein Drucksensor, ein Temperatursensor und/oder ein Durchflusssensor ist, der mit dem Hauptkühlkreislauf (2) verbunden ist, wobei der mindestens eine Sensor (7) zum Detektieren der Leckage oder Blockierung des Hauptkühlkreislaufes (2) konfiguriert ist.

9. Kühlsystem (S) nach einem vorstehenden Anspruch,
wobei der temporäre Kühlkreislauf (3) eine Speichereinheit (8) umfasst, die zum Halten eines Volumens an Wärmeübertragungsfluid (F) konfiguriert ist, wobei das Volumen an Wärmeübertragungsfluid (F) in dem redundanten Betriebszustand (S_{R}) als ein Wärmepuffer zum Kühlen des Fahrzeugbauteils (1) angeordnet ist.

10. Kühlsystem (S) nach Anspruch 9,
wobei der temporäre Kühlkreislauf (3) eine Pumpe (9) zum Zirkulierenlassen von Wärmeübertragungsfluid (F) in dem temporären Kühlkreislauf (3) in dem redundanten Betriebszustand (S_{R}) zu dem Fahrzeugbauteil (1) und durch die Speichereinheit (8) umfasst, wobei das Kühlsystem (S) zum Aktivieren der Pumpe (9) bei Detektion der Fehlfunktion des Hauptkühlkreislaufes (2) konfiguriert ist.

11. Kühlsystem (S) nach einem vorstehenden Anspruch,
wobei der Hauptkühlkreislauf (2) in dem normalen Betriebszustand (S_{N}) durch die Ventileinheit (4) vollständig von dem temporären Kühlkreislauf (3) getrennt ist und wobei der temporäre Kühlkreislauf (3) in dem redundanten Betriebszustand (S_{R}) durch die Ventileinheit (4) vollständig von dem Hauptkühlkreislauf (2) getrennt ist.

12. Kühlsystem (S) nach einem vorstehenden Anspruch,
wobei die Ventileinheit (4) als ein druckbetriebenes passives Ventil konfiguriert ist, wobei Druck von zirkuliertem Wärmeübertragungsfluid (F) in dem temporären Kühlkreislauf (3) bei Aktivierung des temporären Kühlkreislaufes (3) zum Kühlen des Fahrzeugbauteils (1) in dem redundanten Betriebszustand (S_{R}) die Ventileinheit (4) betreibt, um den temporären Kühlkreislauf (3) in einer Fluidkommunikation mit dem Fahrzeugbauteils (1) zu verbinden und den Hauptkühlkreislauf (2) von der Fluidkommunikation mit dem Fahrzeugbauteil (1) zu trennen.

13. Verfahren zum Betrieb eines Kühlsystems (S) zum Kühlen eines Fahrzeugbauteils (1), wobei das Kühlsystem (S) einen Hauptkühlkreislauf (2), der mit dem Fahrzeugbauteil (1) verbunden ist, einen temporären Kühlkreislauf (3), der mit dem Fahrzeugbauteil (1) verbunden ist, und eine Ventileinheit (4) umfasst,
wobei die Ventileinheit (4) einen ersten Auslassströmungsanschluss (6a) und einen ersten Einlassströmungsanschluss (5a) umfasst, die mit dem Fahrzeugbauteil (1) verbunden sind, wobei die Ventileinheit (4) einen zweiten Einlassströmungsanschluss (5b) und einen zweiten Auslassströmungsanschluss (6b) umfasst, die mit dem Hauptkühlkreislauf (2) verbunden sind, wobei die Ventileinheit (4) einen dritten Einlassströmungsanschluss (5c) und einen dritten Auslassströmungsanschluss (6c) umfasst, die mit dem temporären Kühlkreislauf (3) verbunden sind, wobei die Ventileinheit (4) einen Ventilkörper (4a) umfasst,
wobei das Kühlsystem (S) dazu konfiguriert ist, in einem normalen Betriebszustand (S_{N}) oder bei einer Fehlfunktion des Hauptkühlkreislaufes (2) in einem redundanten Betriebszustand (S_{R}) betrieben zu werden, wobei das Verfahren die folgenden Schritte umfasst:
Anordnen des Hauptkühlkreislaufes (2) in dem normalen Betriebszustand (S_{N}) in Fluidkommunikation mit dem Fahrzeugbauteil (1) über die Ventileinheit (4);
Anordnen des temporären Kühlkreislaufes (3) in dem redundanten Betriebszustand (S_{R}) in Fluidkommunikation mit dem Fahrzeugbauteil (1) über die Ventileinheit (4) und Aktivieren des temporären Kühlkreislaufes (3) zum Kühlen des Fahrzeugbauteils (1) in dem redundanten Betriebszustand (S_{R});
Anordnen des Ventilkörpers (4a) in einer ersten Ventilposition (P_{V1}) in dem normalen Betriebszustand (S_{N}), wobei in der ersten Ventilposition (P_{V1}) der zweite Einlassströmungsanschluss (5b) in Fluidkommunikation mit dem ersten Auslassströmungsanschluss (6a) steht und der zweite Auslassströmungsanschluss (6b) in Fluidkommunikation mit dem ersten Einlassströmungsanschluss (5a) steht;
Anordnen des Ventilkörpers (4a) in einer zweiten Ventilposition (P_{V2}) in dem redundanten Betriebszustand (S_{R}), wobei in der zweiten Ventilposition (P_{V2}) der dritte Einlassströmungsanschluss (5c) in Fluidkommunikation mit dem ersten Auslassströmungsanschluss (6a) steht und der dritte Auslassströmungsanschluss (6c) in Fluidkommunikation mit dem ersten Einlassströmungsanschluss (5a) steht.

14. Verfahren nach Anspruch 13,
wobei das Verfahren ferner die folgenden Schritte umfasst: Trennen des temporären Kühlkreislaufes (3) in dem normalen Betriebszustand (S_{N}) von einer Fluidkommunikation mit dem Fahrzeugbauteil (1) durch die Ventileinheit (4);
Trennen des Hauptkühlkreislaufes (2) in dem redundanten Betriebszustand (S_{R}) von der Fluidkommunikation mit dem Fahrzeugbauteil (1) durch die Ventileinheit (4).

15. Verfahren nach Anspruch 13 oder 14,
wobei das Verfahren ferner die folgenden Schritte umfasst: Blockieren einer Fluidkommunikation zwischen dem dritten Einlassströmungsanschluss (5c) und dem ersten Auslassströmungsanschluss (6a) und Blockieren einer Fluidkommunikation zwischen dem dritten Auslassströmungsanschluss (6c) und dem ersten Einlassströmungsanschluss (5a) durch den Ventilkörper (4a) in der ersten Ventilposition (P_{V1});
Blockieren einer Fluidkommunikation zwischen dem zweiten Einlassströmungsanschluss (5b) und dem ersten Auslassströmungsanschluss (6a) und Blockieren einer Fluidkommunikation zwischen dem zweiten Auslassströmungsanschluss (6b) und dem ersten Einlassströmungsanschluss (5a) durch den Ventilkörper (4a) in der zweiten Ventilposition (P_{V2}).

16. Verfahren nach einem der Ansprüche 13 bis 15,
wobei das Kühlsystem (S) mindestens einen Sensor (7) umfasst, der zum Detektieren der Fehlfunktion des Hauptkühlkreislaufes (2) konfiguriert ist, wobei die Fehlfunktion des Hauptkühlkreislaufes (2) eine Leckage von Wärmeübertragungsfluid (F) von dem Hauptkühlkreislauf (2) oder eine Blockierung von Wärmeübertragungsfluid (F) in dem Hauptkühlkreislauf (2) ist, wobei der mindestens eine Sensor (7) ein Drucksensor, ein Temperatursensor und/oder ein Durchflusssensor ist, der mit dem Hauptkühlkreislauf (2) verbunden ist, wobei das Verfahren ferner den folgenden Schritt umfasst: Detektieren der Leckage oder Blockierung des Hauptkühlkreislaufes (2) durch den mindestens einen Sensor (7).

17. Verfahren nach einem der Ansprüche 13 bis 16,
wobei der temporäre Kühlkreislauf (3) eine Speichereinheit (8) umfasst, die zum Halten eines Volumens an Wärmeübertragungsfluid (F) konfiguriert ist, wobei das Volumen an Wärmeübertragungsfluid (F) in dem redundanten Betriebszustand (S_{R}) als ein Wärmepuffer zum Kühlen des Fahrzeugbauteils (1) angeordnet ist, wobei der temporäre Kühlkreislauf (3) eine Pumpe (9) zum Zirkulierenlassen von Wärmeübertragungsfluid (F) in dem temporären Kühlkreislauf (3) in dem redundanten Betriebszustand (S_{R}) zu dem Fahrzeugbauteil (1) und durch die Speichereinheit (8) umfasst, wobei das Verfahren ferner den folgenden Schritt umfasst: Aktivieren der Pumpe (9) bei Detektion der Fehlfunktion des Hauptkühlkreislaufes (2).

18. Verfahren nach einem der Ansprüche 13 bis 17,
wobei das Verfahren ferner die folgenden Schritte umfasst: vollständiges Trennen des Hauptkühlkreislaufes (2) von dem temporären Kühlkreislauf (3) durch die Ventileinheit (4) in dem normalen Betriebszustand (S_{N});
vollständiges Trennen des temporären Kühlkreislaufes (3) von dem Hauptkühlkreislauf (2) durch die Ventileinheit (4) in dem redundanten Betriebszustand (S_{R}).

19. Verfahren nach einem der Ansprüche 13 bis 18,
wobei die Ventileinheit (4) als ein druckbetriebenes passives Ventil konfiguriert ist, wobei das Verfahren ferner die folgenden Schritte umfasst: Betreiben der Ventileinheit (4) durch Druck von zirkuliertem Wärmeübertragungsfluid (F) in dem temporären Kühlkreislauf (3) bei Aktivierung des temporären Kühlkreislaufes (3) zum Kühlen des Fahrzeugbauteils (1) in dem redundanten Betriebszustand (S_{R}), wobei die Ventileinheit (4) den redundanten Kühlkreislauf (3) in einer Fluidkommunikation mit dem Fahrzeugbauteil (1) verbindet und den Hauptkühlkreislauf (2) von der Fluidkommunikation mit dem Fahrzeugbauteil (1) trennt.

20. Fahrzeug, umfassend ein Kühlsystem (S) zum Kühlen eines Fahrzeugbauteils (1) nach einem der Ansprüche 1 bis 12.

## Revendications

1. Système de refroidissement (S) destiné au refroidissement d'un composant de véhicule (1), dans lequel le système de refroidissement (S) comprend un circuit de refroidissement principal (2) raccordé au composant de véhicule (1) et un circuit de refroidissement temporaire (3) raccordé au composant de véhicule (1),
dans lequel le système de refroidissement (S) est configuré pour être actionné dans un état opérationnel normal (S_{N}) au moyen du circuit de refroidissement principal (2), ou dans un état opérationnel redondant (S_{R}) au moyen du circuit de refroidissement temporaire (3) lors d'un dysfonctionnement du circuit de refroidissement principal (2),
dans lequel le système de refroidissement (S) comprend une unité de vanne (4), dans lequel le circuit de refroidissement principal (2) est raccordé au composant de véhicule (1) par l'intermédiaire de l'unité de vanne (4) dans l'état opérationnel normal (S_{N}), et dans lequel le circuit de refroidissement temporaire (3) est raccordé au composant de véhicule (1) par l'intermédiaire de l'unité de vanne (4) dans l'état opérationnel redondant (S_{R}),
dans lequel le système de refroidissement (S) est configuré pour activer le circuit de refroidissement temporaire (3) afin de refroidir le composant de véhicule (1) dans l'état opérationnel redondant (S_{R}),
**caractérisé en ce que** l'unité de vanne (4) comprend un premier orifice d'écoulement de sortie (6a) et un premier orifice d'écoulement d'entrée (5a) raccordés au composant de véhicule (1), dans lequel l'unité de vanne (4) comprend un deuxième orifice d'écoulement d'entrée (5b) et un deuxième orifice d'écoulement de sortie (6b) raccordés au circuit de refroidissement principal (2), et dans lequel l'unité de vanne (4) comprend un troisième orifice d'écoulement d'entrée (5c) et un troisième orifice d'écoulement de sortie (6c) raccordés au circuit de refroidissement temporaire (3).

2. Système de refroidissement (S) selon la revendication 1,
dans lequel l'unité de vanne (4) est adaptée pour isoler le circuit de refroidissement temporaire (3) de toute communication fluidique avec le composant de véhicule (1) dans l'état opérationnel normal (S_{N}), et dans lequel l'unité de vanne (4) est adaptée pour isoler le circuit de refroidissement principal (2) de toute communication fluidique avec le composant de véhicule (1) dans l'état opérationnel redondant (S_{R}).

3. Système de refroidissement (S) selon la revendication 1 ou 2,
dans lequel le système de refroidissement (S) comprend un circuit de refroidissement supplémentaire (10) raccordé au composant de véhicule (1) et à l'unité de vanne (4), dans lequel chacun parmi le circuit de refroidissement principal (2) et le circuit de refroidissement temporaire (3) peut être raccordé au composant de véhicule (1) par l'intermédiaire de l'unité de vanne (4) et du circuit de refroidissement supplémentaire (10).

4. Système de refroidissement (S) selon l'une quelconque des revendications précédentes,
dans lequel l'unité de vanne (4) comprend un corps de vanne (4a), dans lequel le corps de vanne (4a) dans l'état opérationnel normal (S_{N}) est agencé dans une première position de vanne (P_{V1}) et dans lequel le corps de vanne (4a) dans l'état opérationnel redondant (S_{R}) est agencé dans une deuxième position de vanne (P_{V2}),
dans lequel, dans la première position de vanne (P_{V1}), le deuxième orifice d'écoulement d'entrée (5b) est en communication fluidique avec le premier orifice d'écoulement de sortie (6a) et le deuxième orifice d'écoulement de sortie (6b) est en communication fluidique avec le premier orifice d'écoulement d'entrée (5a),
dans lequel, dans la deuxième position de vanne (P_{V2}), le troisième orifice d'écoulement d'entrée (5c) est en communication fluidique avec le premier orifice d'écoulement de sortie (6a) et le troisième orifice d'écoulement de sortie (6c) est en communication fluidique avec le premier orifice d'écoulement d'entrée (5a).

5. Système de refroidissement (S) selon la revendication 4,
dans lequel, dans la première position de vanne (P_{V1}), le corps de vanne (4a) bloque la communication fluidique entre le troisième orifice d'écoulement d'entrée (5c) et le premier orifice d'écoulement de sortie (6a) et bloque la communication fluidique entre le troisième orifice d'écoulement de sortie (6c) et le premier orifice d'écoulement d'entrée (5a),
dans lequel, dans la deuxième position de vanne (P_{V2}), le corps de vanne (4a) bloque la communication fluidique entre le deuxième orifice d'écoulement d'entrée (5b) et le premier orifice d'écoulement de sortie (6a) et bloque la communication fluidique entre le deuxième orifice d'écoulement de sortie (6b) et le premier orifice d'écoulement d'entrée (5a).

6. Système de refroidissement (S) selon la revendication 4 ou 5,
dans lequel le corps de vanne (4a) présente une configuration de volet, dans lequel le corps de vanne (4a) est configuré pour pivoter autour d'une structure d'arbre (4b) lors d'un displacement entre la première position de vanne (P_{V1}) et la deuxième position de vanne (P_{V2}).

7. Système de refroidissement (S) selon l'une quelconque des revendications précédentes,
dans lequel le système de refroidissement (S) comprend au moins un capteur (7) configuré pour détecter le dysfonctionnement du circuit de refroidissement principal (2).

8. Système de refroidissement (S) selon la revendication 7,
dans lequel le dysfonctionnement du circuit de refroidissement principal (2) est une fuite de fluide caloporteur (F) provenant du circuit de refroidissement principal (2) ou un blocage de fluide caloporteur (F) dans le circuit de refroidissement principal (2), dans lequel l'au moins un capteur (7) est un capteur de pression, un capteur de température et/ou un capteur de débit raccordé au circuit de refroidissement principal (2), dans lequel l'au moins un capteur (7) est configuré pour détecter la fuite ou le blocage du circuit de refroidissement principal (2).

9. Système de refroidissement (S) selon l'une quelconque des revendications précédentes,
dans lequel le circuit de refroidissement temporaire (3) comprend une unité de stockage (8) configurée pour contenir un volume de fluide caloporteur (F), dans lequel le volume de fluide caloporteur (F) est agencé sous forme de tampon thermique pour le refroidissement du composant de véhicule (1) dans l'état opérationnel redondant (S_{R}).

10. Système de refroidissement (S) selon la revendication 9, dans lequel le circuit de refroidissement temporaire (3) comprend une pompe (9) pour faire circuler du fluide caloporteur (F) dans le circuit de refroidissement temporaire (3) vers le composant de véhicule (1) et à travers l'unité de stockage (8) dans l'état opérationnel redondant (S_{R}), dans lequel le système de refroidissement (S) est configuré pour activer la pompe (9) lors de la détection du dysfonctionnement du circuit de refroidissement principal (2).

11. Système de refroidissement (S) selon l'une quelconque des revendications précédentes,
dans lequel, dans l'état opérationnel normal (S_{N}), le circuit de refroidissement principal (2) est entièrement séparé du circuit de refroidissement temporaire (3) par l'unité de vanne (4), et dans lequel, dans l'état opérationnel redondant (S_{R}), le circuit de refroidissement temporaire (3) est entièrement séparé du circuit de refroidissement principal (2) par l'unité de vanne (4).

12. Système de refroidissement (S) selon l'une quelconque des revendications précédentes,
dans lequel l'unité de vanne (4) est configurée sous forme de vanne passive actionnée par pression, dans lequel, lors de l'activation du circuit de refroidissement temporaire (3) pour le refroidissement du composant de véhicule (1) dans l'état opérationnel redondant (S_{R}), la pression provenant du fluide caloporteur (F) mis en circulation dans le circuit de refroidissement temporaire (3) actionne l'unité de vanne (4) pour raccorder le circuit de refroidissement temporaire (3) en communication fluidique avec le composant de véhicule (1) et isoler le circuit de refroidissement principal (2) de toute communication fluidique avec le composant de véhicule (1).

13. Procédé permettant de faire fonctionner un système de refroidissement (S) destiné au refroidissement d'un composant de véhicule (1), dans lequel le système de refroidissement (S) comprend un circuit de refroidissement principal (2) raccordé au composant de véhicule (1), un circuit de refroidissement temporaire (3) raccordé au composant de véhicule (1), et une unité de vanne (4),
dans lequel l'unité de vanne (4) comprend un premier orifice d'écoulement de sortie (6a) et un premier orifice d'écoulement d'entrée (5a) raccordés au composant de véhicule (1), dans lequel l'unité de vanne (4) comprend un deuxième orifice d'écoulement d'entrée (5b) et un deuxième orifice d'écoulement de sortie (6b) raccordés au circuit de refroidissement principal (2), dans lequel l'unité de vanne (4) comprend un troisième orifice d'écoulement d'entrée (5c) et un troisième orifice d'écoulement de sortie (6c) raccordés au circuit de refroidissement temporaire (3), dans lequel l'unité de vanne (4) comprend un corps de vanne (4a),
dans lequel le système de refroidissement (S) est configuré pour être actionné dans un état opérationnel normal (S_{N}), ou dans un état opérationnel redondant (S_{R}) lors d'un dysfonctionnement du circuit de refroidissement principal (2), dans lequel le procédé comprend les étapes consistant à :
agencer le circuit de refroidissement principal (2) en communication fluidique avec le composant de véhicule (1) par l'intermédiaire de l'unité de vanne (4) dans l'état opérationnel normal (S_{N}) ;
agencer le circuit de refroidissement temporaire (3) en communication fluidique avec le composant de véhicule (1) par l'intermédiaire de l'unité de vanne (4) dans l'état opérationnel redondant (S_{R}), et activer le circuit de refroidissement temporaire (3) pour le refroidissement du composant de véhicule (1) dans l'état opérationnel redondant (S_{R}) ;
agencer le corps de vanne (4a) dans une première position de vanne (P_{V1}) dans l'état opérationnel normal (S_{N}), dans lequel, dans la première position de vanne (P_{V1}), le deuxième orifice d'écoulement d'entrée (5b) est en communication fluidique avec le premier orifice d'écoulement de sortie (6a) et le deuxième orifice d'écoulement de sortie (6b) est en communication fluidique avec le premier orifice d'écoulement d'entrée (5a) ;
agencer le corps de vanne (4a) dans une deuxième position de vanne (P_{V2}) dans l'état opérationnel redondant (S_{R}), dans lequel, dans la deuxième position de vanne (P_{V2}), le troisième orifice d'écoulement d'entrée (5c) est en communication fluidique avec le premier orifice d'écoulement de sortie (6a) et le troisième orifice d'écoulement de sortie (6c) est en communication fluidique avec le premier orifice d'écoulement d'entrée (5a).

14. Procédé selon la revendication 13,
dans lequel le procédé comprend en outre les étapes consistant à : isoler le circuit de refroidissement temporaire (3) de toute communication fluidique avec le composant de véhicule (1) par l'unité de vanne (4) dans l'état opérationnel normal (S_{N}) ;
isoler le circuit de refroidissement principal (2) de toute communication fluidique avec le composant de véhicule (1) par l'unité de vanne (4) dans l'état opérationnel redondant (S_{R}).

15. Procédé selon la revendication 13 ou 14,
dans lequel le procédé comprend en outre les étapes consistant à : bloquer la communication fluidique entre le troisième orifice d'écoulement d'entrée (5c) et le premier orifice d'écoulement de sortie (6a) et bloquer la communication fluidique entre le troisième orifice d'écoulement de sortie (6c) et le premier orifice d'écoulement d'entrée (5a) par le corps de vanne (4a) dans la première position de vanne (P_{V1}) ;
bloquer la communication fluidique entre le deuxième orifice d'écoulement d'entrée (5b) et le premier orifice d'écoulement de sortie (6a) et bloquer la communication fluidique entre le deuxième orifice d'écoulement de sortie (6b) et le premier orifice d'écoulement d'entrée (5a) par le corps de vanne (4a) dans la deuxième position de vanne (P_{V2}).

16. Procédé selon l'une quelconque des revendications 13 à 15,
dans lequel le système de refroidissement (S) comprend au moins un capteur (7) configuré pour détecter le dysfonctionnement du circuit de refroidissement principal (2), dans lequel le dysfonctionnement du circuit de refroidissement principal (2) est une fuite de fluide caloporteur (F) provenant du circuit de refroidissement principal (2) ou un blocage de fluide caloporteur (F) dans le circuit de refroidissement principal (2), dans lequel l'au moins un capteur (7) est un capteur de pression, un capteur de température et/ou un capteur de débit raccordé au circuit de refroidissement principal (2), dans lequel le procédé comprend en outre l'étape consistant à : détecter la fuite ou le blocage du circuit de refroidissement principal (2) par l'au moins un capteur (7).

17. Procédé selon l'une quelconque des revendications 13 à 16,
dans lequel le circuit de refroidissement temporaire (3) comprend une unité de stockage (8) configurée pour contenir un volume de fluide caloporteur (F), dans lequel le volume de fluide caloporteur (F) est agencé sous forme de tampon thermique pour le refroidissement du composant de véhicule (1) dans l'état opérationnel redondant (S_{R}), dans lequel le circuit de refroidissement temporaire (3) comprend une pompe (9) pour faire circuler du fluide caloporteur (F) dans le circuit de refroidissement temporaire (3) vers le composant de véhicule (1) et à travers l'unité de stockage (8) dans l'état opérationnel redondant (S_{R}), dans lequel le procédé comprend en outre l'étape consistant à : activer la pompe (9) lors de la détection du dysfonctionnement du circuit de refroidissement principal (2).

18. Procédé selon l'une quelconque des revendications 13 à 17,
dans lequel le procédé comprend en outre les étapes consistant à : séparer entièrement le circuit de refroidissement principal (2) du circuit de refroidissement temporaire (3) par l'unité de vanne (4) dans l'état opérationnel normal (S_{N}) ;
séparer entièrement le circuit de refroidissement temporaire (3) du circuit de refroidissement principal (2) par l'unité de vanne (4) dans l'état opérationnel redondant (S_{R}).

19. Procédé selon l'une quelconque des revendications 13 à 18,
dans lequel l'unité de vanne (4) est configurée sous forme de vanne passive actionnée par pression, dans lequel le procédé comprend en outre les étapes consistant à : actionner l'unité de vanne (4) par la pression provenant du fluide caloporteur (F) mis en circulation dans le circuit de refroidissement temporaire (3) lors de l'activation du circuit de refroidissement temporaire (3) pour le refroidissement du composant de véhicule (1) dans l'état opérationnel redondant (S_{R}), dans lequel l'unité de vanne (4) raccorde le circuit de refroidissement temporaire (3) en communication fluidique avec le composant de véhicule (1) et isole le circuit de refroidissement principal (2) de toute communication fluidique avec le composant de véhicule (1).

20. Véhicule comprenant un système de refroidissement (S) destiné au refroidissement d'un composant de véhicule (1), selon l'une quelconque des revendications 1 à 12.
